# FASCICULE DE BREVET EUROPEEN

(11) **EP 0 592 029 B1**
(45) Date de publication et mention de la délivrance du brevet: **05.12.2001**
(21) Numéro de dépôt: 93202668.5
(22) Date de dépôt: 15.09.1993
(51) Int. Cl.: G06T 9/20

(54) **Dispositif de codage d'images fixes et dispositif de decodage correspondant**
Vorrichtung zur Kodierung von umbeweglichen Bildern und entsprechende Dekodiervorrichtung
Still image coding device and corresponding decoding device

(30) Priorité: 23.09.1992 FR 9211331
(43) Date de publication de la demande: 13.04.1994
(73) Titulaire: Koninklijke Philips Electronics N.V., 5621 BA Eindhoven (NL)
(72) Inventeur: Oddou, Christophe, F-75008 Paris (FR)
(74) Mandataire: Landousy, Christian

(56) Documents cités:
- US-A- 3 987 412
- COMPUTER VISION GRAPHICS AND IMAGE PROCESSING. vol. 28, no. 1 , Octobre 1984 , NEW YORK US DAVID W. CAPSON 'an improved algorithm for the sequential extraction of boundaries from a raster scan'

## Description

La présente invention concerne un dispositif de codage d'images fixes comprenant des moyens de segmentation desdites images en régions homogènes auxquelles est attaché un label spécifique et des moyens de codage du contenu et des contours desdites régions, ainsi qu'un dispositif de décodage correspondant. Cette invention est utilisable notamment dans le domaine de la transmission et/ou du stockage d'images fixes, par exemple dans des applications telles que celles impliquant un dispositif "Minitel" ou similaire, pour la réalisation de codeurs-décodeurs restant extrêmement simples.

De nombreux documents, et par exemple l'article "Recent results in high-compression imaging coding", de M. Kunt, M. Bénard et R. Leonardi, paru dans IEEE Transactions on Circuits and Systems, vol.CAS-34, n°11, novembre 1987. pp. 1306-1336, décrivent la technique de codage reposant sur le principe d'une segmentation préalable de chaque image en tout un ensemble de régions préservant cependant les contours correspondant aux objets présents dans l'image. Ladite segmentation consiste, dans ses grandes lignes, à déterminer dans l'image, selon certains critères, des régions relativement homogènes, c'est-à-dire à variation faible ou nulle de luminosité, et à coder alors d'une part le contenu de ces régions et d'autre part leur contour.

A l'heure actuelle, on dispose de procédés qui semblent satisfaisants pour le codage, avec compression de données, de la texture ou du contenu de ces régions. Par contre, il n'en est pas de même pour les contours qui, étant d'autant plus nombreux que les régions le sont elles-mêmes, restent très coûteux en matière de codage du fait qu'ils représentent une part très importante des signaux à coder. En outre les signaux ainsi codés présentent une redondance importante puisque le contour d'une région définit en partie le contour de régions voisines.

Un premier but de l'invention est donc de proposer un dispositif de codage qui permet une réduction sensible du coût de codage grâce à une très notable diminution du nombre des données de contour à transmettre.

A cet effet l'invention concerne un dispositif de codage tel que défini dans le préambule de la description et caractérisé en ce que lesdits moyens de codage de contour comprennent un sous-ensemble de codage d'informations de contour comprenant lui-même :
a) des moyens de détection des contours dans l'image à coder, lesdits contours détectés étant disponibles sous la forme des paires de coordonnées des points d'image successifs appartenant auxdits contours ;
b) des moyens de détection, sur le contour de chaque région successivement considérée, du sens de parcours réel sur le type de bord de contour(gauche, resp. droit) retenu pour la transmission après codage, et de test par comparaison, pour chaque couple de points d'image successifs de chaque tronçon de contour de ladite région lorsque ce contour est parcouru pour chaque région dans un sens de rotation unique prédéterminé, entre le sens de parcours réel ainsi détecté et le sens de parcours instantané entre ces deux points, le sens de parcours réel étant celui selon lequel les paires de coordonnées des points d'un contour sont rencontrées lors du balayage de l'image, et le sens de parcours instantané étant celui observé entre deux points d'un tronçon selon qu'il appartient à une région ou à la région adjacente qui a le tronçon en commun ;
c) des moyens de sélection et de codage exclusivement de ceux de ces tronçons de contour qui sont parcourus dans ledit sens de parcours réel détecté ;
d) des moyens pour commander l'exécution effective de la procédure mettant en oeuvre les moyens prévus en (a), (b), (c) pour chacune des régions issues de la segmentation.

La structure ainsi proposée permet de transmettre les données de contour sans redondance d'information. En effet, en ne transmettant, du contour de chaque région, que les bords tournés vers un même côté, par exemple exclusivement les bords gauches, on évite de transmettre deux fois le même tronçon de contour à l'occasion du traitement de deux régions adjacentes.

Un autre but de l'invention est de proposer un dispositif de décodage apte à décoder les signaux codés émis par un dispositif de codage tel que celui mentionné ci-dessus.

A cet effet l'invention concerne un dispositif de décodage de signaux correspondant à des images fixes et préalablement codés à l'aide d'un dispositif de codage comprenant des moyens de segmentation desdites images en régions homogènes auxquelles est attaché un label spécifique et des moyens de codage du contenu et des contours desdites régions, ledit dispositif de décodage comprenant lui-même des moyens de décodage desdits signaux et des moyens de restitution d'images décodées correspondant auxdites images fixes d'origine, caractérisé en qu'il comprend un sous-ensemble de décodage des informations codées relatives aux contours desdites régions, comprenant lui-même :
(a) des moyens de décodage respectivement du premier point de chaque tronçon de contour transmis et du ou des autres points dudit tronçon ;
(b) des moyens d'écriture en mémoire d'image desdits premier et autres points de chaque tronçon de contour transmis, d'identification de chaque tronçon par le label de la région correspondante, et de balayage et de remplissage de ladite mémoire d'image par le label courant correspondant à chaque tronçon rencontré ;
(c) des moyens de séquencement pour commander l'exécution effective de la procédure mettant en oeuvre les moyens prévus en (a), (b).

Les particularités et avantages de l'invention apparaîtront maintenant de façon plus précise dans la description qui suit et dans les dessins annexés, donnés à titre d'exemples non limitatifs et dans lesquels :
- les figures 1 et 5 montrent des exemples de réalisation respectivement d'un dispositif de codage et d'un dispositif de décodage selon l'invention ;
- la figure 2 montre un exemple d'image de labels telle que stockée dans ce dispositif de codage, après la segmentation d'une image d'origine, ici de 20 x 8 points d'image ;
- la figure 3 montre un exemple simplifié d'une image à quatre régions, avec représentation de certains bords qui constituent un bord gauche pour une région, mais un bord droit pour une région adjacente, et la figure 4 montre l'image correspondante lorsqu'il ne subsiste plus que ceux des tronçons du contour de chaque région qui sont du type de bord de contour (ici les bords gauches) choisi pour la transmission.

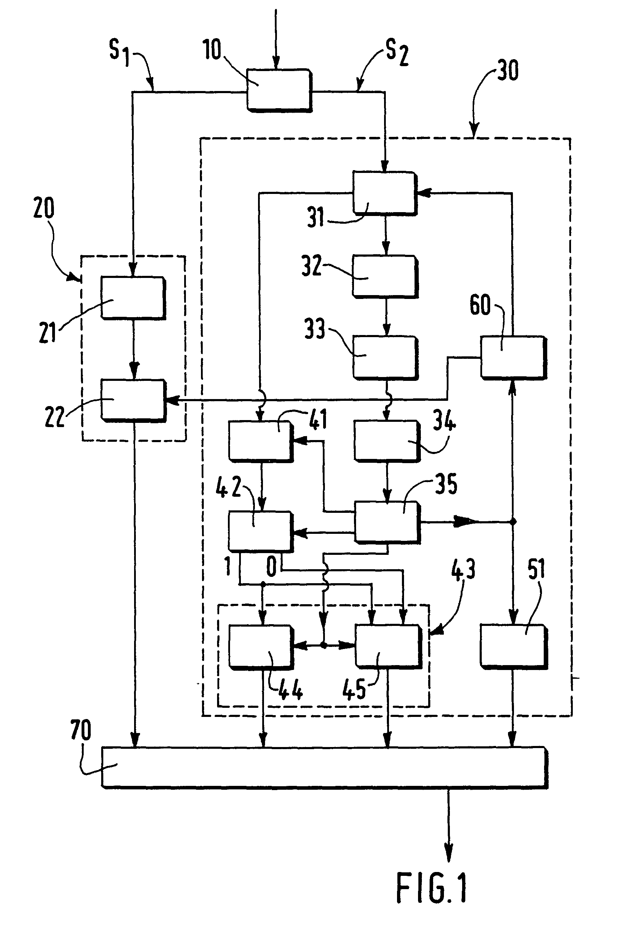

Le dispositif de codage représenté sur la figure 1 comprend tout d'abord un sous-ensemble de segmentation 10 subdivisant chaque image de la séquence d'images en régions homogènes. La segmentation, qui est ici réalisée selon le procédé dit "split and merge" décrit par exemple dans le document déjà cité, permet de disposer, sur deux sorties S₁ et S₂ du sous-ensemble 10, d'une part de données exprimant le contenu des régions, et d'autre part de données de contour, ici sous forme de labels ou étiquettes définissant l'appartenance des points d'image (ou pixels) à telle ou telle région. La première sortie S₁, qui délivre les données relatives au contenu des régions, est envoyée vers un sous-ensemble 20 de codage des informations de texture de chaque région, tandis que la deuxième sortie S₂, qui délivre les données de contour, est envoyée vers un sous-ensemble 30 de codage de ces données.

Le sous-ensemble 20 comprend en série une mémoire 21 de stockage des informations de texture et un circuit de codage 22 de ces informations. L'exécution effective du codage, ou sa validation, est commandée, comme on le verra plus loin, par le sous-ensemble 30. Dans le cas où les variations spatiales de luminosité constituant lesdites informations de texture sont exprimées à l'aide de fonctions polynomiales d'ordre peu élevé, lorsque par exemple il est associé à chaque région un polynôme de la forme Z = a + bx + cy qui décrit de la meilleure façon possible les variations du niveau de gris dans cette région et où a, b, c, constituent un jeu de coefficients polynomiaux spécifiques attaché à cette région, le codage est réalisé par exemple en disposant, dans le plan représentatif de cette expression Z, de trois points non colinéaires d'amplitudes Z₁, Z₂, Z₃ et en codant ces valeurs Z₁, Z₂, Z₃ sur 8 bits.

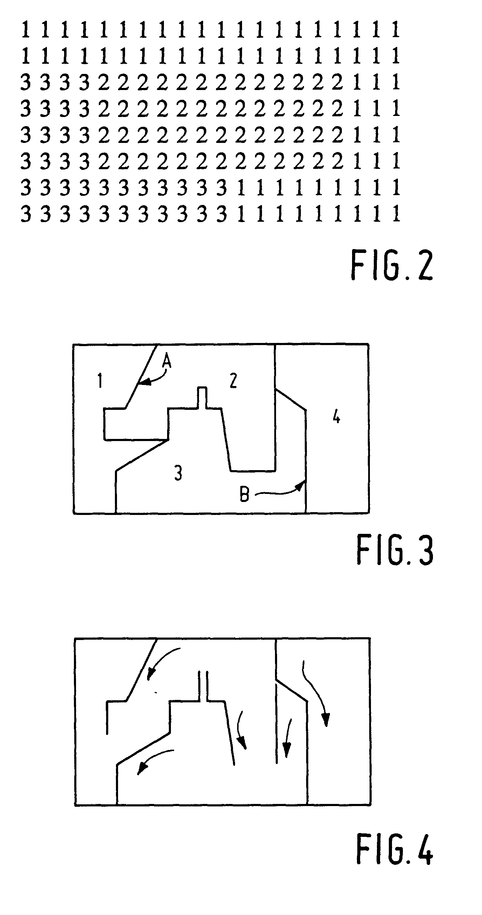

Le sous-ensemble 30 comprend, lui, tout d'abord une mémoire 31 de stockage des labels pour toute l'image considérée. La figure 2 montre un exemple, particulièrement simple puisque trois régions seulement y apparaissent, mais tout à fait explicite cependant, d'une image de labels telle que stockée par ladite mémoire 31, et correspondant dans ce cas à une image de 20 x 8 points d'image. Chacune des régions est repérée par son label, ici 1, 2 ou 3, et tous les pixels sans exception sont affectés de l'un de ces labels, la frontière réelle entre les régions passant entre les labels de valeurs différentes. Cette mémoire 31 est suivie, en série, de circuits 32 à 35 qui, eux, traitent successivement chacune des régions issues de la segmentation. Une réinitialisation permet de passer du traitement d'une région à celui de la suivante, jusqu'à épuisement de toutes les régions de l'image segmentée. Ces circuits de traitement de chaque région sont successivement un circuit 32 de détection de contour de région par détection des changements de label (lors d'un balayage quelconque et par exemple ligne par ligne ou colonne par colonne), une mémoire d'image 33 assurant le stockage du contour de région détecté (par exemple en mettant à deux niveaux de luminosité bien distincts les pixels situés sur ce contour et ceux situés partout ailleurs, de part et d'autre du contour), un circuit 34 de suivi de ce contour pour reconstitution de celui-ci, et une mémoire de stockage 35 qui, au fur et à mesure de ce suivi de contour, est en mesure de stocker la suite des coordonnées des pixels concernés appartenant à ce contour.

Le sous-ensemble 30 comprend d'autre part un détecteur 41 du sens de parcours instantané sur chaque contour de région, pour un type de bord de contour déterminé (c'est-à-dire par exemple pour un bord gauche ; mais ce pourrait être aussi pour un bord droit). L'intérêt de ce circuit est le suivant. Si, pour la transmission d'images qui doit suivre le codage, on transmet la totalité du contour de chaque région, on constate que chaque contour va être transmis deux fois : une fois en tant que contour d'une région déterminée, une autre fois en tant que contour d'une région adjacente à cette région déterminée. Cette situation est mise en évidence sur la figure 3 qui montre un exemple simplifié d'une image à quatre régions 1, 2, 3, 4 où le tronçon A est un bord droit de la région 1 mais un bord gauche de la région 2, le tronçon B est un bord droit de la région 3 mais un bord gauche de la région 4, etc... La notion de bords gauche et droit est définie ici pour une image dont le balayage (celui de l'image initiale, ou celui de l'image de labels stockée après segmentation) intervient de façon tout à fait classique, c'est-à-dire de gauche à droite sur la ligne, puis ligne par ligne de haut en bas, mais d'autres types de balayage que ce balayage de type TV pourraient, sans que l'invention s'en trouve limitée, être adoptés : par exemple un balayage de haut en bas sur une colonne puis colonne par colonne de droite à gauche.

Pour éviter une telle redondance de transmission (la double transmission des contours), on décide alors de ne transmettre qu'une fois chaque contour : il suffit pour cela de ne transmettre, pour le contour d'une région déterminée, que les tronçons du contour d'un certain type, par exemple les tronçons constituant des bords gauches. En effet les tronçons constituant des bords droits, et qui ne vont donc pas être transmis au titre des informations liées à la région concernée, constituent par contre des bords gauches pour une région adjacente à ladite région concernée (en fait, située à sa droite) et seront donc transmis au titre des informations liées à cette région adjacente.

Ayant ainsi choisi, quelle que soit la région considérée dans l'image, le type de tronçon de contour que l'on veut transmettre (ici, et dans toute la suite de la description, les tronçons constituant des bords gauches), il faut, compte tenu du sens de parcours effectif sur le contour de la région concernée (ce sens de parcours effectif, dans le sens des aiguilles d'une montre, ou au contraire dans le sens inverse, est celui qui correspond à l'ordre dans lequel, en mémoire 35, on rencontre les paires de coordonnées des pixels successifs appartenant à ce contour), déterminer quel est le sens de parcours réel (de haut en bas, ou au contraire de bas en haut) sur ceux des bords retenus a priori pour la transmission (ici, les bords gauches). Cette détermination est effectuée par le détecteur 41, qui reçoit à cet effet la sortie de la mémoire 31 de stockage de l'image de labels et la sortie de la mémoire 35 de stockage de la suite des coordonnées des pixels du contour concerné. Ce détecteur 41 détermine ce sens de parcours réel en vérifiant si pour deux points successifs du contour les labels de la région concernée se trouvent à droite ou à gauche : s'ils se trouvent à droite lorsque le sens de parcours effectif sur le contour est celui des aiguilles d'une montre, le sens de parcours réel sur les bords gauches est de bas en haut, s'ils se trouvent au contraire à gauche lorsque le sens de parcours effectif sur le contour est le sens inverse des aiguilles d'une montre, ce sens de parcours réel sur les bords gauches est de haut en bas. La figure 4 montre, en correspondance à la figure 3, une image où il ne subsiste plus que les bords gauches des quatre régions de la figure 3 et où les flèches représentées montrent que, dans l'exemple ici décrit, l'ordre de succession des pixels (tels que mémorisés par leurs coordonnées dans la mémoire 35) correspond à un sens de parcours effectif dans le sens inverse des aiguilles d'une montre (c'est la deuxième des hypothèses ci-dessus énoncées), et donc que tout tronçon du contour qui constitue un bord gauche est réellement décrit, pour un tel sens de parcours effectif, du haut vers le bas, ce que l'on peut appeler son sens de parcours instantané.

Une fois ce sens de parcours instantané déterminé, un circuit de test 42, situé en sortie du détecteur 41 et qui reçoit également la sortie de la mémoire 35, entre en fonctionnement pour vérifier si, pour chaque couple de pixels successifs rencontré en parcourant le contour dans le sens tel que défini par l'ordre de stockage en mémoire 35, le sens de parcours instantané est ou non le sens de parcours déterminé par le détecteur 41.

Si la réponse est positive (sortie "1" du circuit de test 42 : le sens de parcours instantané est effectivement le sens de parcours déterminé par le détecteur 41), ce circuit 42 commande le fonctionnement de moyens de sélection et de codage, qui consistent ici en un étage de codage 43. Cet étage 43 distingue lui-même deux situations différentes :
- le premier pixel du couple de pixels concerné est le premier point d'un tronçon de contour pour lequel la réponse du circuit de test redevient positive : ce premier pixel est alors le premier point d'un tronçon qui va être codé en continu jusqu'à ce que ladite réponse redevienne négative, et, dans ce cas, le codage de ce premier pixel, et de lui seul, est assuré par un circuit de codage 44 qui reçoit la sortie "1" du circuit 42 ;
- ce premier pixel du couple concerné n'est pas le premier point dudit tronçon, mais fait simplement partie de ce tronçon codé en continu : dans ce cas, le codage de ce point (et de tous les points suivants dudit tronçon) est assuré par un circuit de codage 45, qui reçoit également la sortie "1" du circuit 42.

Dans l'exemple ici décrit, le circuit 44 de codage du premier point d'un tronçon délivre, après émission d'un en-tête de tronçon codé destiné à être lu au décodage, les coordonnées absolues de ce point, tandis que le circuit 45 de codage des points suivants délivre des informations relatives, définies par rapport auxdites coordonnées absolues, mais cette solution n'est pas la seule solution possible et ne constitue pas une limitation de la présente invention.

Si la réponse du circuit de test 42 est ou devient au contraire négative (sortie "0" de ce circuit : le sens de parcours instantané n'est pas le sens de parcours déterminé par le détecteur 41), ce circuit 42 commande la désactivation du circuit de codage 45 (qui reçoit donc la sortie "0" de ce circuit 42), pour interdire tout codage tant que la réponse du circuit de test n'est pas redevenue positive.

Le sous-ensemble 30 comprend aussi un circuit de séquencement 60, commandé par la mémoire 35 (lorsque le dernier point du contour d'une région a été considéré). La sortie de ce circuit 60 assure la validation effective (voir la connexion correspondante sur la figure 1) du codage réalisé par le circuit de codage 22 du sous-ensemble 20 de codage des informations de texture, en synchronisme avec celui réalisé par l'étage de codage 43, puis commande la réinitialisation de toute la procédure ici décrite pour une nouvelle région (et ainsi de suite jusqu'à épuisement de toutes les régions de l'image). Le sous-ensemble 30 comprend enfin un compteur de régions 51, affectant un numéro distinct à chaque nouvelle région successivement traitée pour permettre au décodage de réassocier à chaque contour de région d'image les données qui lui sont propres dans le flot des signaux binaires à décoder. Un multiplexeur 70 reçoit les signaux de sortie des circuits 22, 44, 45 et 51 et délivre la suite de signaux numériques envoyée vers le canal de transmission.

Pour résumer, le fonctionnement du dispositif de codage selon l'invention est le suivant. Une fois la chaîne de contour (c'est-à-dire la suite des coordonnées des pixels de chaque contour) déterminée pour une région (chaque région devenant ainsi, successivement, la région courante), on procède sur cette chaîne de contour au repérage d'au moins un couple de pixels situé sur le type de bord de contour retenu pour la transmission, sur un bord gauche par exemple, dans le cas présent. Pour ces pixels, on note le sens de parcours du contour, de bas en haut ou de haut en bas dans l'exemple du bord gauche : tous les bords similaires, tous les bords gauches dans l'exemple ci-dessus, doivent alors nécessairement être parcourus dans le même sens. On recommence alors le balayage séquentiel de la chaîne de contour, pixel par pixel, et l'on n'effectue le codage et la transmission que des pixels auxquels correspond un sens de parcours instantané identique au sens de parcours du type de bord retenu pour la transmission.

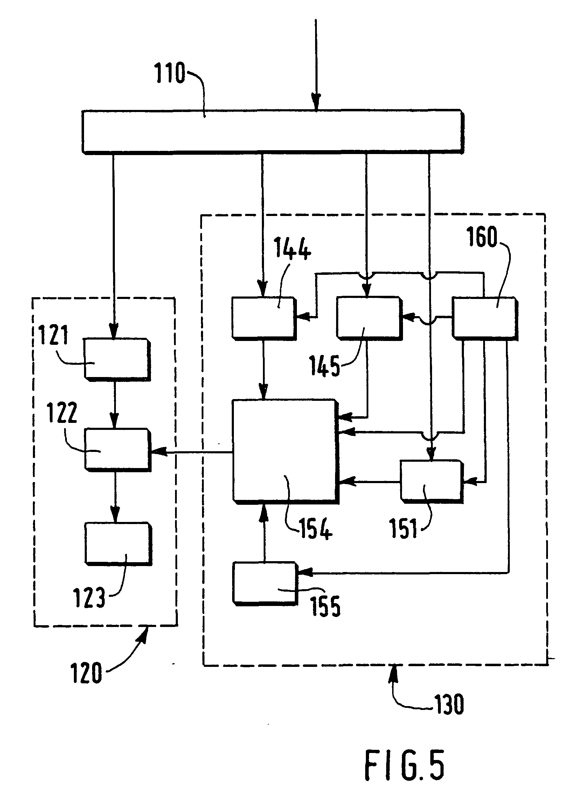

Réciproquement, lorsque des images fixes ont été codées conformément à la description précédente, un dispositif de décodage apte à décoder les signaux codés émis par le dispositif de codage décrit peut être proposé dans le cadre de la présente invention. Dans l'exemple de réalisation ici décrit, ce dispositif de décodage, représenté sur la figure 5. comprend tout d'abord un démultiplexeur 110 recevant, après leur transmission, les différents signaux délivrés par le dispositif de codage et destiné à les aiguiller vers les circuits appropriés dudit dispositif de décodage, comme indiqué maintenant.

Un sous-ensemble 120 de décodage des informations de texture de chaque région reçoit du démultiplexeur 110 les signaux provenant du sous-ensemble 20, c'est-à-dire, ici, les coefficients polynomiaux codés. Ce sous-ensemble 120 comprend en série une mémoire 121 de stockage de ces informations de texture, puis un circuit 122 de synthèse polynomiale et une mémoire d'image 123.

Un sous-ensemble 130 de décodage de contours (ces contours constituant une partition ou segmentation d'image telle que celle obtenue et codée conformément à la description précédente) reçoit les autres signaux de sortie du démultiplexeur 110. Dans ce sous-ensemble 130, l'en-tête de tronçon codé et les coordonnées absolues du premier point d'un tronçon de contour à transmettre, délivrés par le circuit de codage 44, sont reçus par un circuit 144 de décodage du premier point de chaque tronçon de contour transmis, tandis que les signaux codés correspondant aux coordonnées des points suivants dudit tronçon, délivrés par le circuit de codage 45, sont reçus par un circuit 145 de décodage des autres points du tronçon de contour transmis. Enfin, un compteur de région 151 reçoit les signaux codés délivrés par le compteur de régions 51 et correspondant aux numéros des régions traitées. Le sous-ensemble 130 comprend d'autre part, une mémoire d'image 154, un circuit 155 de balayage et de remplissage de cette mémoire, et un circuit de séquencement 160 pour commander l'exécution effective du traitement de décodage pour chacune des régions issues de la segmentation initiale.

Le fonctionnement du dispositif de décodage est le suivant. Le numéro de la région courante, donné par le compteur de régions 151, est inscrit dans la mémoire d'image 154, dans une position définie par le flot des signaux décodés. Plus précisément, le circuit 144 de décodage du premier point d'un tronçon de contour permet d'initialiser ou de mettre à jour, dans cette mémoire 154, la position d'écriture, en vue de l'écriture dudit premier point de tronçon de contour. Le circuit 145 de décodage des autres points dudit tronçon, commandé par le circuit 144, commande alors l'écriture de ces autres points dans ladite mémoire 154. Une fois que tous les bords retenus pour la transmission, par exemple ici les bords gauches, sont ainsi tracés, on balaye l'image ligne par ligne (de gauche à droite, puis de haut en bas, dans le cas de l'exemple ici décrit), en écrivant le label courant tant qu'un bord gauche n'est pas rencontré, ou le nouveau label concerné quand un bord gauche est traversé. On procède de façon similaire à chaque traversée d'un bord gauche au fur et à mesure du balayage, jusqu'à ce que soit restituée toute l'image de labels qui correspond à l'image segmentée d'origine.

La sortie de la mémoire d'image 154 est alors envoyée vers une deuxième entrée du circuit 122 de synthèse polynomiale, afin de délimiter, pour chaque région, la zone où s'effectue cette synthèse, et permettre ainsi la restitution, par la mémoire d'image 123, d'une image décodée correspondant aux images fixes d'origine.

Bien entendu, la présente invention n'est pas limitée aux exemples de réalisation ci-dessus décrits et représentés, à partir desquels des variantes peuvent être proposées sans pour cela sortir du cadre de l'invention. En particulier, on doit préciser que la solution technique ici proposée est applicable quel que soit le type de contour.

Par exemple, une précédente demande de brevet français n° 9210757, déposée le 9 septembre 1992 par la société demanderesse, décrit un dispositif de codage dans lequel la chaîne des pixels d'origine du contour est transformée en une chaîne polygonale de tronçons de contour successifs. Plus précisément, ce dispositif considère l'image segmentée à coder, y détecte les différents contours de régions par examen des labels au cours d'un balayage de l'image, puis sélectionne sur le contour de chaque région les points dits triples, où il y a contact entre au moins trois régions, et éventuellement des points de contrôle supplémentaires. Le dispositif transforme alors le fragment de contour de forme quelconque qui se trouve entre deux de ces points successifs en un tronçon de droite qui en constitue une approximation. La succession des tronçons ainsi formée constitue un contour polygonal auquel s'applique la présente invention, de façon d'ailleurs particulièrement avantageuse puisque, les tronçons étant rectilignes, il suffit d'en coder (et transmettre) les deux extrémités pour pouvoir les restituer au décodage.

## Revendications

1. Dispositif de codage d'images fixes comprenant des moyens de segmentation desdites images en régions homogènes auxquelles est attaché un label spécifique et des moyens de codage du contenu et des contours desdites régions, **caractérisé en ce que** lesdits moyens de codage de contour comprennent un sous-ensemble de codage d'informations de contour comprenant lui-même :
a) des moyens de détection des contours dans l'image à coder, lesdits contours détectés étant disponibles sous la forme des paires de coordonnées des points d'image successifs appartenant auxdits contours ;
b) des moyens de détection, sur le contour de chaque région successivement considérée, du sens de parcours réel sur le type de bord de contour(gauche, resp. droit) retenu pour la transmission après codage, et de test par comparaison, pour chaque couple de points d'image successifs de chaque tronçon de contour de ladite région lorsque ce contour est parcouru pour chaque région dans un sens de rotation unique prédéterminé, entre le sens de parcours réel ainsi détecté et le sens de parcours instantané entre ces deux points, le sens de parcours réel étant celui selon lequel les paires de coordonnées des points d'un contour sont rencontrées lors du balayage de l'image, et le sens de parcours instantané étant celui observé entre deux points d'un tronçon selon qu'il appartient à une région ou à la région adjacente qui a le tronçon en commun ;
c) des moyens de sélection et de codage exclusivement de ceux de ces tronçons de contour qui sont parcourus dans ledit sens de parcours réel détecté ;
d) des moyens pour commander l'exécution effective de la procédure mettant en oeuvre les moyens prévus en (a), (b), (c) pour chacune des régions issues de la segmentation.

2. Dispositif selon la revendication 1, **caractérisé en ce que** lesdits moyens de sélection et de codage comprennent un étage de codage comprenant lui-même en parallèle un circuit de codage du premier point desdits tronçons et un circuit de codage du ou des autres points du même tronçon.

3. Dispositif de décodage de signaux correspondant à des images fixes et préalablement codés à l'aide d'un dispositif de codage comprenant des moyens de segmentation desdites images en régions homogènes auxquelles est attaché un label spécifique et des moyens de codage du contenu et des contours desdites régions, ledit dispositif de décodage comprenant lui-même des moyens de décodage desdits signaux et des moyens de restitution d'images décodées correspondant auxdites images fixes d'origine, caractérisé en qu'il comprend un sous-ensemble de décodage des informations codées relatives aux contours desdites régions, comprenant lui-même:
(a) des moyens de décodage respectivement du premier point de chaque tronçon de contour transmis et du ou des autres points dudit tronçon ;
(b) des moyens d'écriture en mémoire d'image desdits premier et autres points de chaque tronçon de contour transmis, d'identification de chaque tronçon par le label de la région correspondante, et de balayage et de remplissage de ladite mémoire d'image par le label courant correspondant à chaque tronçon rencontré ;
(c) des moyens de séquencement pour commander l'exécution effective de la procédure mettant en oeuvre les moyens prévus en (a), (b).

## Patentansprüche

1. Vorrichtung zur Kodierung von unbeweglichen Bildern mit Verfahren zur Segmentierung der besagten Bilder in homogene Bereiche, denen ein bestimmtes Label zugeteilt wird, und Verfahren zur Kodierung des Inhalts und der Konturen der besagten Bereiche, **dadurch gekennzeichnet, daß** die besagten Verfahren zur Konturkodierung ein Untersystem zur Kodierung von Konturinformationen enthält, wiederum bestehend aus:
a) Verfahren zur Erkennung der Konturen in dem zu kodierenden Bild, wobei die besagten abgegangenen Konturen in der Form von Koordinatenpaaren aufeinanderfolgender, zu den besagten Konturen gehörender Bildpunkte verfügbar sind;
b) Verfahren zur Erkennung in der Kontur jedes aufeinanderfolgend betrachteten Bereichs der reellen Wegrichtung entlang des Konturrandtyps (links respektive rechts), betrachtet zur Übertragung nach Kodierung, und für den Vergleichstest jedes aufeinanderfolgenden Bildpunktepaars jedes Konturabschnitts des besagten Bereichs, wenn diese Kontur für jeden Bereich in einer einzigen, vorbestimmten Rotationsrichtung abgegangen wird, zwischen der reellen, so erkannten und der momentanen Wegrichtung zwischen diesen beiden Punkten, wobei die reelle Wegrichtung diejenige ist, in der man den Koordinatenpaare der Punkte einer Kontur beim Abtasten des Bildes begegnet, und die momentane Wegrichtung diejenige ist, die je nachdem zwischen zwei Punkten eines Abschnitts zu beobachten ist, ob sie zu einem Bereich oder zum angrenzenden Bereich mit dem gemeinsamen Abschnitt gehört;
c) Verfahren zur exklusiven Auswahl und Kodierung derjenigen Konturabschnitte, die in der besagten reell erkannten Wegrichtung abgegangen werden;
d) Verfahren zur Steuerung der effektiven Durchführung dieses Vorgangs, unter Verwendung der unter (a), (b), (c) vorgesehenen Verfahren für jeden aus der Segmentierung hervorgegangenen Abschnitt.

2. Vorrichtung nach Anspruch 1, **dadurch gekennzeichnet, daß** die besagten Auswahl- und Kodierverfahren eine Kodierstufe enthalten, die selbst parallel eine Kodierschaltung für den ersten Punkt der besagten Abschnitte und eine Kodierschaltung für den oder die anderen Punkte desselben Abschnitts enthält.

3. Vorrichtung zur Dekodierung von Signalen entsprechend zuvor mit einer Kodiervorrichtung kodierter unbeweglicher Bilder, mit Verfahren zur Segmentierung der besagten Bilder in homogene Bereiche, denen ein bestimmtes Label zugeteilt wird, und Verfahren zur Kodierung des Inhalts und der Konturen der besagten Bereiche, wobei die Vorrichtung zur Dekodierung selbst Verfahren zur Dekodierung der besagen Signale und Verfahren zur Wiederherstellung der kodierten Bilder entsprechend der besagten unbeweglichen Originalbilder enthält, **dadurch gekennzeichnet, daß** es ein Untersystem zur Dekodierung der kodierten Informationen in bezug auf die Konturen der besagten Bereiche enthält, wiederum bestehend aus:
(a) Verfahren zur respektiven Dekodierun des ersten Punktes jedes übertragenen Konturabschnitts und des oder der anderen Punkte des besagten Abschnitts;
(b) Verfahren zum Schreiben in den Bildspeicher des besagten ersten und der anderen Punkte jedes übertragenen Konturabschnitts, zur Identifizierung jedes Abschnitts anhand des Labels des entsprechenden Bereichs und zum Abtasten und Füllen des besagten Bildspeichers mit dem laufenden, jedem begegneten Abschnitt entsprechenden Label;
(c) Verfahren zum Sequenzieren zur Steuerung der effektiven Durchführung dieses Vorgangs, unter Verwendung der unter (a), (b) vorgesehenen Verfahren.

## Claims

1. A device for coding still images, comprising means for segmenting said images into homogeneous regions whereto a specific label is attached, and means for coding the contents and the contours of said regions, **characterized in that** said contour coding means comprise a sub-assembly for coding contour information which itself comprises:
(a) means for detecting contours in the image to be coded, said detected contours being available in the form of pairs of coordinates of successive image points belonging to said contours;
(b) means for detecting, on the contour of each region successively considered, the real direction of orientation on the type of contour edge (left or right) retained for the transmission after coding, and for testing, by comparing, for each pair of successive image points of each contour segment of said region, when said contour is followed for each region in a predetermined unique direction of rotation, the real direction of orientation thus detected an the instantaneous direction of orientation between these two points, the real direction of orientation being that according to which the pairs of coordinates of points of a contour are encountered during the scanning of the image and the instantaneous direction of orientation being that observed between two points of a segment according to which they belong to a region or to the adjacent region common to the segment;
(c) means for selecting and coding exclusively the contour segments traversed in said detected real direction of orientation;
(d) means for controlling the effective execution of the method, utilizing the means specified sub (a), (b), (c) for each of the regions resulting from the segmentation.

2. A device as claimed in Claim 1, **characterized in that** said means for selecting and coding comprise a coding stage which itself comprises a parallel connection of a circuit for coding the first point of said segments and a circuit for coding the other point or points of the same segment.

3. A device for decoding signals corresponding to the still images previously coded by means of a coding device comprising means for segmenting said images into homogeneous regions whereto a specific label is attached and means for coding the contents and the contours of said regions, said decoding device itself comprising means for decoding said signals and means for reconstructing decoded images corresponding to said original still images, **characterized in that** it comprises a sub-assembly for decoding coded information relating to the contours of said regions, which sub-assembly itself comprises:
(a) means for decoding the first point of each contour segment transmitted and the other point or points of said segment;
(b) means for writing said first and other points of each transmitted contour segment into an image memory, for identifying each segment by the label of the corresponding region, and for scanning and filling said image memory with the current label corresponding to each segment encountered;
(c) sequencing means for controlling the effective execution of the method utilizing the means specified sub (a), (b).
